(19) Europäisches Patentamt
European Patent Office
Office européen des brevets

(11) **EP 1 793 213 B1**

(12) **FASCICULE DE BREVET EUROPEEN**

(45) Date de publication et mention
de la délivrance du brevet:
**21.10.2015   Bulletin 2015/43**

(51) Int Cl.:
***G01J 3/453*** (2006.01)

(21) Numéro de dépôt: **06291838.8**

(22) Date de dépôt: **29.11.2006**

(54) **Spectrophotomètre à échantillonnage comprenant un interféromètre**

Abtastspektrometer mit Interferometer

Sampling spectrometer with interferometer

(84) Etats contractants désignés:
**DE GB IT NL**

(30) Priorité:  **01.12.2005   FR 0512208**

(43) Date de publication de la demande:
**06.06.2007   Bulletin 2007/23**

(73) Titulaire: **Airbus Defence and Space SAS
78130 Les Mureaux (FR)**

(72) Inventeur: **Pasternak, Frédérick
31590 Gaure (FR)**

(74) Mandataire: **Cabinet Plasseraud
52, rue de la Victoire
75440 Paris Cedex 09 (FR)**

(56) Documents cités:
**EP-A- 1 503 192     US-B1- 6 351 307**

**Description**

La présente invention concerne un spectrophotomètre à échantillonnage qui comprend un interféromètre, ainsi qu'un procédé d'analyse spectrale d'un faisceau lumineux.

Les spectrophotomètres dits à transformation de Fourier sont bien connus, par exemple du brevet US 6351307. Chacun de ces instruments est essentiellement constitué d'un interféromètre qui produit un interférogramme à partir d'un faisceau lumineux dirigé dans l'entrée de l'appareil. Des mesures d'intensité lumineuse sont enregistrées, qui correspondent respectivement à des valeurs fixées d'une différence de longueur de trajet optique. Cette différence de longueur de trajet optique présente des écarts identiques entre deux mesures successives dans l'interférogramme. La distribution spectrale de la lumière du faisceau est alors évaluée en calculant une transformation de Fourier des intensités mesurées en fonction des valeurs de la différence de longueur de trajet optique.

Or, la réduction de l'interférogramme à un échantillon limité de mesures d'intensité lumineuse engendre une incertitude sur la fréquence à laquelle correspond une intensité de composante spectrale calculée par transformation de Fourier. Ce problème est bien connu et est appelé «repliement de spectre». Pour supprimer cette incertitude, l'interféromètre est associé à un filtre au sein du spectrophotomètre, qui sélectionne une partie de la lumière du faisceau lumineux. De cette façon, la lumière à l'origine de l'interférogramme correspond à un intervalle spectral qui est déterminé par le filtre. Les fréquences auxquelles correspondent les intensités de composantes spectrales qui sont calculées appartiennent alors nécessairement à cet intervalle.

Le filtre doit être choisi en fonction de l'intervalle spectral d'analyse : il doit présenter une fenêtre de filtrage dont des limites correspondent à celles de l'intervalle d'analyse. Or un filtre qui correspond à un intervalle spectral quelconque n'est pas toujours disponible. La variété limitée des filtres disponibles engendre donc une contrainte sur l'intervalle spectral dans lequel un faisceau lumineux peut être analysé en utilisant un spectrophotomètre à transformation de Fourier. Une telle contrainte peut être pénalisante, notamment pour des mesures spatiales effectuées depuis un satellite, car le filtre du spectrophotomètre ne peut pas être changé facilement.

Un but de la présente invention consiste alors à supprimer la nécessité d'utiliser un filtre pour réaliser des mesures spectrophotométriques par échantillonnage d'un interférogramme.

Pour cela, l'invention propose un spectrophotomètre qui comprend un interféromètre agencé pour produire, à partir d'un faisceau lumineux entrant dans ce spectrophotomètre, un échantillon d'un interférogramme selon des valeurs fixées d'une différence de longueur de trajet optique. Les valeurs de la différence de longueur de trajet optique présentent des écarts successifs qui sont variables, et qui sont adaptés pour qu'une distribution spectrale de la lumière dans le faisceau peut être évaluée à partir de l'ensemble suivant d'équations :

$$\sum_{k=1}^{k=N} A_k \times \cos(2\Pi \times f_k \times \delta_i) = M_i \qquad (1)$$

pour chaque nombre entier i de 1 à N, N étant le nombre de mesures d'intensité lumineuse dans l'échantillon d'interférogramme, et où
$M_i$ est la i-ème mesure d'intensité lumineuse de l'échantillon d'interférogramme,
$\delta_i$ est valeur de la différence de longueur de trajet optique correspondant à la mesure $M_i$,
$f_k$ est une fréquence moyenne correspondant à une composante spectrale de la lumière du faisceau, k étant un nombre entier de 1 à N permettant d'identifier N fréquences $f_k$ différentes, et
$A_k$ est une intensité lumineuse de la composante spectrale du faisceau qui correspond à la fréquence $f_k$.

Ainsi, selon l'invention, les écarts entre les valeurs de la différence de longueur de trajet optique qui correspondent à deux mesures successives d'intensité lumineuse dans l'interférogramme ne sont plus identiques. La distribution spectrale de la lumière dans le faisceau ne peut alors plus être évaluée par transformation de Fourier, mais elle peut être évaluée en résolvant l'ensemble d'équations (1). Cet ensemble d'équations forme un système de N équations linéaires à N inconnues, dont les inconnues sont les valeurs $A_k$ des intensités des composantes spectrales associées aux fréquences $f_k$. Un tel système d'équations peut être résolu très simplement, d'une façon connue, en utilisant des moyens de calculs simples et peu onéreux.

Grâce à un choix approprié des valeurs $\delta_i$ des différences de longueur de trajet optique, et notamment parce que les écarts $\delta_{i+1}-\delta_i$ ne sont pas identiques pour des couples différents de mesures successives $M_i$, $M_{i+1}$ d'intensité lumineuse dans l'interférogramme, aucun repliement de spectre n'intervient dans l'identification des fréquences $f_k$.

Selon un mode de réalisation préféré de l'invention, l'interféromètre peut comprendre un appareil de Michelson. Dans ce cas, les différentes valeurs de la différence de longueur de trajet optique peuvent être réalisées simultanément. L'ensemble des intensités lumineuses qui constituent l'échantillon de l'interférogramme peuvent donc être mesurées en même temps, en utilisant une barrette de photodétecteurs. Un gain de temps de mesure en résulte.

L'appareil de Michelson peut en outre être lui-même pourvu d'un miroir plan et d'un miroir à échelette, disposés pour réfléchir des parties respectives du faisceau lumineux. Dans ce cas, les valeurs de la différence de longueur de trajet optique peuvent être fixées par le miroir à échelette. Ces valeurs peuvent alors être connues avec précision, ce qui permet d'évaluer plus exactement la distribution spectrale du faisceau. Alternativement, les deux miroirs de l'appareil de Michelson peuvent être à échelette.

Selon un perfectionnement de l'invention, l'interféromètre peut former plusieurs interférogrammes qui correspondent à des intervalles spectraux respectifs. Le spectrophotomètre peut alors comprendre en outre un système dispersif agencé de façon à séparer spatialement des parties de la lumière du faisceau qui correspondent respectivement aux interférogrammes. Avantageusement, les interférogrammes peuvent être constitués d'ensembles respectifs de valeurs d'intensité lumineuse qui sont mesurées parallèlement à une direction d'interférogramme commune, et le système dispersif est orienté de sorte qu'une direction de dispersion de celui-ci est sensiblement perpendiculaire à la direction d'interférogramme. Pour un tel spectrophotomètre, l'intervalle spectral qui correspond à chacun des interférogrammes peut être déduit d'informations recueillies selon la direction de dispersion. En outre, l'utilisation d'une matrice de photodétecteurs permet d'enregistrer simultanément tous les interférogrammes. Le temps de mesure nécessaire pour analyser un faisceau lumineux n'est donc pas augmenté.

L'invention propose aussi un procédé d'analyse spectrale d'un faisceau lumineux qui comprend les étapes suivantes :

- former un interférogramme en dirigeant le faisceau lumineux dans un spectrophotomètre qui comprend un interféromètre,
- mesurer un nombre fini d'intensités lumineuses de l'interférogramme, de façon à former un échantillon de celui-ci, les mesures d'intensité lumineuse correspondant à des valeurs respectives d'une différence de longueur de trajet optique présentant des écarts variables ;
- identifier des fréquences correspondant à des composantes spectrales respectives de la lumière du faisceau ; et
- calculer des intensités respectives des composantes spectrales à partir de l'ensemble d'équations (1).

Un tel procédé d'analyse spectrale peut être mis en oeuvre en utilisant un spectrophotomètre tel que décrit précédemment.

En particulier, lorsque le spectrophotomètre incorpore un système dispersif en plus de l'interféromètre, les fréquences $f_k$ des composantes spectrales de la partie du faisceau lumineux qui forme l'un des interférogrammes peuvent être sélectionnées dans un intervalle spectral déduit des mesures. Cet intervalle est déterminé, pour chaque interférogramme, par une résolution spectrale du système dispersif et par une position de cet interférogramme qui est fixée par le système dispersif.

D'autres particularités et avantages de la présente invention apparaîtront dans la description ci-après de deux exemples de réalisation non limitatifs, en référence aux dessins annexés, dans lesquels :

- la figure 1 est un schéma optique de principe d'un spectrophotomètre auquel l'invention peut être appliquée ;

- les figures 2a et 2b sont des diagrammes caractérisant un miroir à échelette pouvant être utilisé dans le spectrophotomètre de la figure 1 ;

- la figure 3a est un schéma optique de principe d'un spectrophotomètre selon un perfectionnement de l'invention ; et

- la figure 3b représente une matrice de photodétecteurs pouvant utilisée dans le spectrophotomètre de la figure 3a.

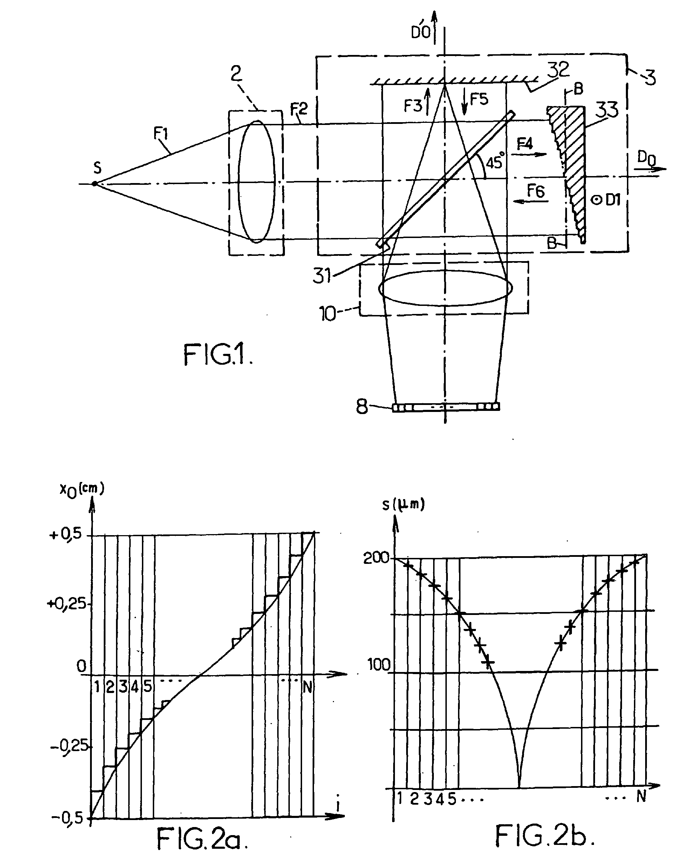

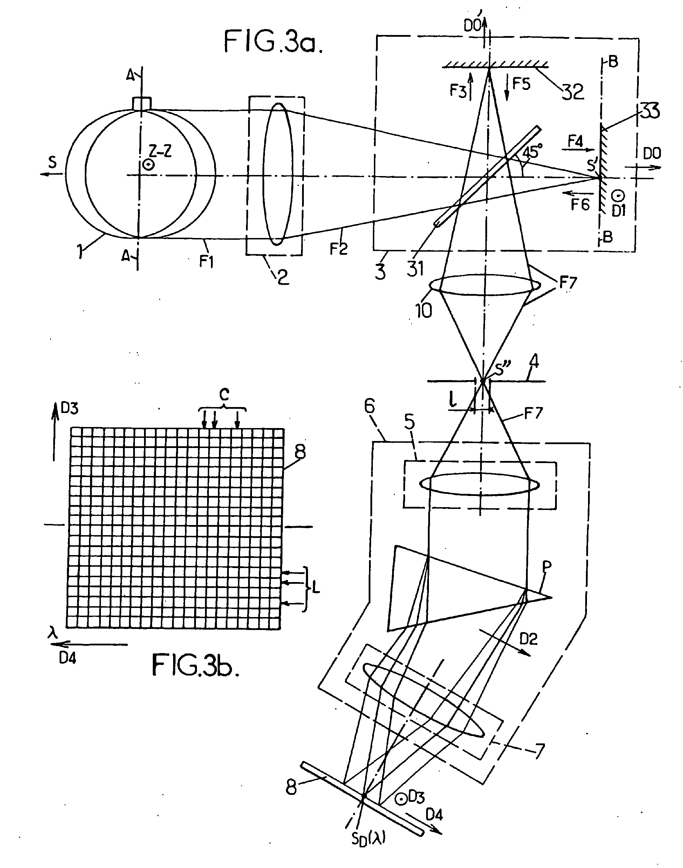

Les figures 1 et 3a illustrent des agencements différents d'éléments optiques au sein de spectrophotomètres selon deux modes de réalisation particuliers de l'invention. Pour raison de clarté, les dimensions des éléments optiques représentés dans ces figures et les distances entre ces éléments ne sont pas en proportion avec des dimensions et des distances réelles. En outre, des références identiques sur ces figures désignent des éléments identiques, ou qui ont des fonctions identiques. Enfin, dans ce qui suit, les éléments optiques connus de l'Homme du métier ne sont pas décrits en détail. Des indications sont seulement données concernant leur utilisation au sein des spectrophotomètres décrits.

Conformément à la figure 1, un spectrophotomètre comprend une optique d'entrée 2, un interféromètre de Michelson 3, une optique intermédiaire 10 et une barette de photodétecteurs 8. De façon connue, l'interféromètre de Michelson comprend lui-même :

- un dispositif de séparation 31 par division d'intensité d'un faisceau primaire F2 entrant dans l'interféromètre, en deux faisceaux secondaires F3 et F4 ayant des directions de propagation respectives D0' et D0. D0 peut être la direction d'entrée du faisceau primaire F2 dans l'interféromètre 3, et D0' est conjuguée avec la direction D0 par le dispositif de séparation 31. Le dispositif de séparation 31 peut comprendre, par exemple, une lame semi-réfléchissante plane disposée dans un plan tourné de 45 degrés par rapport à la direction D0, autour d'une direction D1 perpendiculaire à cette dernière ;

- deux miroirs 32 et 33 disposés de façon à réfléchir respectivement les faisceaux secondaires F3 et F4, pour former un premier et un second faisceaux secondaires réfléchis F5 et F6 ; et

- un dispositif de regroupement disposé pour regrouper les faisceaux secondaires réfléchis F5 et F6 afin de former un faisceau recombiné F7 sortant de l'interféromètre 3. De façon connue pour des interféromètres de type Michelson, le dispositif de séparation 31 remplit aussi la fonction de regroupement des faisceaux secondaires réfléchis F5 et F6.

Sur la figure 1, par souci de clarté, les faisceaux F3-F6 ne sont représentés que par leurs directions de propagation respectives.

L'optique d'entrée 2 est disposée devant l'entrée de l'interféromètre 3 pour former le faisceau primaire F2 à partir d'un faisceau d'entrée F1. Le faisceau F1 est produit par une source lumineuse S, qui est destinée à être analysée spectralement. L'optique d'entrée 2 est ajustée de sorte que le faisceau primaire F2 présente une configuration de faisceau sensiblement parallèle.

La barette de photodétecteurs 8 est disposée parallèlement à la direction D0, à la sortie de l'interféromètre 3.

L'optique intermédiaire 10 est disposée entre l'interféromètre 3 et la barette de photodétecteurs 8 pour former sur cette dernière une image des miroirs 32 et 33.

Dans ces conditions, l'interféromètre 3 produit un interférogramme de la lumière produite par la source S. Cet interférogramme est formé sur la barette de photodétecteurs 8, de sorte qu'il peut être enregistré.

Le miroir 32 est un miroir plan disposé perpendiculairement à la direction D0', et le miroir 33 est un miroir à échelette. Le miroir 33 est constitué de faces élémentaires perpendiculaires à la direction D0, en forme de lames planes réfléchissantes allongées parallèlement à la direction D1, et juxtaposées selon un axe B-B perpendiculaire aux directions D0 et D1. Les faces élémentaires du miroir 33 sont décalées les unes par rapport aux autres selon la direction D0.

Ces décalages des faces élémentaires du miroir 33 créent une variation de la différence entre les longueurs des trajets optiques qui sont suivis par deux parties d'un même rayon lumineux du faisceau primaire F2, séparées par le dispositif 31. Ces parties de rayon lumineux appartiennent respectivement aux faisceaux secondaires F3 et F4, et sont chacune réfléchies par le miroir 32 ou 33. Les parties de rayon réfléchies appartiennent aux faisceaux secondaires réfléchis F5 et F6, et sont regroupées par le dispositif 31 dans le faisceau F7. Le faisceau F7 correspond donc à une interférence des faisceaux secondaires réfléchis F5 et F6. La différence entre les longueurs des trajets optiques suivis par les deux parties de rayon lumineux dépend de la position du point de réflexion de chacune d'elles sur les miroirs 32 et 33. Elle dépend plus précisément de la position du point de réflexion du faisceau F4 repérée selon l'axe B-B.

L'optique intermédiaire 10 est en outre agencée de sorte que l'image de chaque face élémentaire du miroir à échelette 33 ait une largeur égale à la dimension des photodétecteurs de la barette 8 selon la direction D0. Chaque face élémentaire du miroir 33 est alors conjuguée avec un photodétecteur. Dans ce cas, le nombre de photodétecteurs de la barette 8 est de préférence au moins égal au nombre N de faces élémentaires du miroir 33. N peut être égal, par exemple, à 128.

Les miroirs 32 et 33 peuvent aussi être tous les deux du type à échelette. Dans ce cas, la différence de longueur de trajet optique résulte des décalages des faces élémentaires des deux miroirs. En particulier, ils peuvent être agencés de sorte que les faces optiques élémentaires de chacun des deux miroirs sont respectivement conjuguées optiquement avec celles de l'autre miroir par le dispositif de séparation 31.

La figure 2a est un diagramme qui indique la position de chaque face élémentaire du miroir à échelette 33 selon la direction D0. L'axe horizontal repère le numéro i des faces élémentaires du miroir 33, i allant de 1 à N, et l'axe des ordonnées indique la position de chaque face, notée $x_0$ et exprimée en centimètres. La hauteur des marches visualisées par le diagramme de la figure 2a correspond aux décalages successifs entre les faces élémentaires du miroir 33. On suppose que le centre du miroir 33 correspond au contact optique avec le miroir 32. La différence de longueur de trajet optique qui est associée à la face i du miroir 33, et donc à l'intensité lumineuse mesurée par le i-ème photodétecteur de la barette 8, est alors égale à deux fois la valeur absolue de la valeur correspondante de $x_0$, lue sur le diagramme de la figure 2a. Autrement dit : $\delta_i = 2x_0$.

La figure 2b correspond à la figure 2a et indique l'écart entre les différences de longueur de trajet optique qui correspondent à deux photodétecteurs successifs le long de la barette 8. Cet écart est noté s. Autrement dit, s(i) = $\delta_i$-$\delta_{i-1}$, pour i variant de 2 à N. Les écarts s, exprimés en micromètres et en valeur absolue, sont repérés en ordonnée. La figure 2b illustre des variations des écarts successifs s qui sont symétriques de part et d'autre de la médiane du miroir parallèle à la direction D1. Une telle symétrie permet de corriger numériquement un décalage relatif des deux miroirs 32 et 33 par rapport à une condition de contact optique réalisée au centre du miroir 33.

Les inventeurs ont constaté qu'un miroir à échelette 33 tel que caractérisé par les figures 2a et 2b permet de calculer avec une bonne précision les valeurs d'intensité spectrale $A_k$. Ces valeurs d'intensité spectrale sont obtenues en résolvant le système d'équations (1). Les fréquences $f_k$ sont choisies dans un intervalle de détection du spectrophotomètre, qui peut être déterminé par la sensibilité des photodétecteurs, notamment, ou par un filtre lumineux (non représenté) disposé à l'entrée du spectrophotomètre. En particulier, le déterminant du système d'équations (1), qui a pour coefficient la valeur de $\cos(2\Pi \times f_k \times \delta_i)$ à la i-ème ligne et à la k-ième colonne, n'est pas nul.

Il est précisé que l'ordre des lames réfléchissantes élémentaires du miroir à échelette 33 n'a pas d'importance, dans une première approche de l'invention. Autrement dit, les positions $x_0$ des lames du miroir 33 peuvent être interverties par rapport à un ordre de juxtaposition des lames, sans que le résultat de la distribution spectrale qui est obtenu soit modifié. Lorsque des phénomènes parasites sont pris en compte, tels que des effets d'ombre des lames du miroir à échelette ou des effets de brouillage, il peut être intéressant d'intervertir les décalages des lames du miroir à échelette par rapport aux indications du diagramme 2a.

La figure 3a illustre un perfectionnement de l'invention, selon lequel une indication de l'intervalle des fréquences $f_k$ qui correspondent à des composantes spectrales de chaque interférogramme est simultanément obtenue.

L'interféromètre 3 qui est utilisé pour ce perfectionnement est du type décrit précédemment, dans lequel le miroir à échelette 33 est tourné de 90 degrés autour de la direction D0. La direction D1 devient donc la direction de variation de la différence de longueur de trajet optique.

En outre, la distance entre l'interféromètre 3 et l'optique d'entrée 2 est ajustée de sorte qu'une image S' de la source S est formée à l'intérieur de l'interféromètre 3, sensiblement au niveau des miroirs 32 et 33. L'image S' correspond alors au point de réflexion du faisceau secondaire F4 sur le miroir 33.

Selon la configuration représentée à la figure 3a, la source S est située à grande distance du spectrophotomètre. Seule la direction dans laquelle se situe la source S est alors représentée sur la figure. Dans le jargon de l'Homme du métier, la source S est dite «située à l'infini». Une telle configuration correspond par exemple à une observation spatiale ou terrestre, qui peut être effectuée depuis un satellite. Le spectrophotomètre est alors embarqué à bord du satellite et l'optique d'entrée 2 peut être une optique de télescope.

Selon le perfectionnement, le spectrophotomètre comprend en outre un système dispersif 6 qui est inséré entre l'optique intermédiaire 10 et les photodétecteurs. Le système dispersif 6 est disposé de façon à recevoir en entrée le faisceau F7, dit faisceau intermédiaire dans ce cas. Il peut comprendre une optique de collimation 5, un prisme P et une optique de focalisation 7, qui sont agencés de sorte que la lumière du faisceau intermédiaire F7 traverse successivement l'optique de collimation 5, le prisme P puis l'optique de focalisation 7. Sur la figure 3a, les optiques 5 et 7 sont symboliquement représentées par des lentilles, mais elles peuvent être chacune constituées d'un ensemble optique complexe. L'optique de collimation 5 est par exemple agencée de façon à transformer le faisceau intermédiaire F7 en un faisceau parallèle qui traverse le prisme P. L'optique de focalisation 7 est agencée pour former une image finale $S_D(\lambda)$ de la source S dans un plan conjugué avec le miroir 32. Le prisme P disperse angulairement la lumière issue du faisceau intermédiaire F7 selon une direction D2 sensiblement perpendiculaire à la direction de propagation de la lumière. Un ensemble d'images $S_D(\lambda)$ correspondant à des longueurs d'onde dispersées $\lambda$ différentes sont ainsi formées simultanément. Les images $S_D(\lambda)$ sont décalées entre elles selon une direction D4 conjuguée avec la direction de dispersion D2 par l'optique de focalisation 7.

De façon connue, le prisme P peut être remplacé par un réseau de diffraction, sans changer le fonctionnement du spectrophotomètre.

L'interféromètre 3 et le système dispersif 6 sont orientés l'un par rapport à l'autre de sorte que la direction de dispersion D2 est sensiblement perpendiculaire à la direction D1 de variation de la différence de longueur de trajet optique.

La barette de photodétecteurs est remplacée par une matrice plane de photodétecteurs 8, telle que représentée sur la figure 3b. La matrice 8 est constituée de photodétecteurs répartis en colonnes C et en lignes L perpendiculaires aux colonnes. Les colonnes C sont parallèles à une direction D3 et les lignes de la matrice 8 sont parallèles à la direction D4. La direction D4 est par conséquent la direction de décalage des colonnes C de la matrice 8 les unes par rapport aux autres. La matrice de photodétecteurs 8 est disposée dans le plan conjugué avec le miroir 32 qui contient les images $S_D(\lambda)$. Par conséquent, un spectrophotomètre du type considéré dans le présent perfectionnement de l'invention possède une fonction d'imagerie : il produit, sur la matrice de photodétecteurs 8, une image de chaque source S qui est située dans le champ d'entrée du spectrophotomètre.

Au sein du spectrophotomètre, la matrice de photodétecteurs 8 est donc orientée de sorte que la direction D3 des colonnes C est conjuguée avec la direction D1 de variation de la différence de longueur de trajet optique. Dans le cas d'un système tel que représenté sur la figure 3a, la direction D3 est parallèle à la direction D1. La direction D4 correspond alors à la direction de dispersion D2. En choisissant convenablement le grandissement de l'optique intermédiaire 10, les lignes L de la matrice 8 sont maintenant conjuguées optiquement une à une avec les faces réfléchissantes élémentaires du miroir 33.

L'optique intermédiaire 10 est en outre placée sur le trajet du faisceau intermédiaire F7 de façon à produire une image intermédiaire S" de la source S. Une fente rectangulaire 4 est disposée au niveau de l'image S", dans un plan sensiblement perpendiculaire à la direction de propagation du faisceau intermédiaire F7. La fente 4 présente une grande longueur parallèle à la direction D1 et une largeur I parallèle à la direction D0. De façon connue, la fente 4 joue le rôle de fente d'entrée du système dispersif 6, et chaque colonne de photodétecteurs C de la matrice 8 possède une fonction de fente de sortie du système dispersif 6.

Enfin, et de façon facultative, un dispositif de balayage optique 1 à deux axes peut en outre être disposé sur le trajet du faisceau d'entrée F1. Le premier axe de rotation du dispositif de balayage 1 est perpendiculaire aux directions D0 et D0', et est noté Z-Z. Le second axe de rotation du dispositif 1, noté A-A, est perpendiculaire à l'axe Z-Z, et peut tourner autour de ce dernier. Une ouverture d'entrée du dispositif de balayage 1 parcourt alors un champ d'observation dans lequel se trouve la source lumineuse S, de sorte que le faisceau d'entrée F1 possède, à la sortie du dispositif de balayage 1, une direction de propagation qui est fixe par rapport au spectrophotomètre et sensiblement parallèle à la direction D0. Lors d'une rotation du dispositif de balayage 1 autour de l'axe Z-Z, l'image S' de la source S se déplace parallèlement à l'axe B-B. Lors d'une rotation du dispositif de balayage 1 autour de l'axe A-A, l'image S' de la source S se déplace parallèlement à la direction D1.

Le fonctionnement d'un tel spectrophotomètre est maintenant décrit. Des images $S_D(\lambda_m)$ d'une même source lumineuse S sont formées sur chaque colonne C de la matrice de photodétecteurs 8. La longueur d'onde dispersée $\lambda_m$ est définie par le décalage selon la direction D4 de la colonne C considérée. Elle est en fait une valeur moyenne qui correspond sensiblement à la position du milieu de la colonne C considérée, selon la direction D4.

Simultanément, lors d'une rotation du dispositif de balayage 1 autour de l'axe A-A, les photodétecteurs de chaque colonne C de la matrice 8, parallèle à la direction D3, enregistrent un interférogramme de la lumière du faisceau d'entrée F1. Pour chacun de ces interférogrammes, une évaluation précise de la distribution spectrale d'énergie dans un intervalle qui est centré autour de la longueur d'onde moyenne correspondante $\lambda_m$ peut être calculée. Elle est calculée en résolvant un système d'équations du type (1) associé à chacune des colonnes C de la matrice 8, qui est obtenu à partir des énergies lumineuses reçues par les photodétecteurs de cette colonne C. Pour chacun des interférogrammes, les longueurs d'onde $\lambda_k$ sont réparties autour de la longueur d'onde moyenne $\lambda_m$ de la colonne C correspondante, avec un écart par rapport à celle-ci qui est limité par la résolution spectrale du système dispersif 6 selon la direction D4.

Bien que l'invention a été décrite en utilisant une optique intermédiaire 10 disposée à la sortie de l'interféromètre 3, une telle optique intermédiaire n'est pas indispensable pour la mise en oeuvre de l'invention. Elle peut donc être supprimée, notamment pour obtenir un spectrophotomètre plus léger et plus compact. Dans ce cas, la fente 4 est disposée au sein de l'interféromètre 3, par exemple sur les miroirs 32 et/ou 33.

Enfin, bien que l'invention a été décrite en détail pour des spectrophotomètres construits à partir d'un interféromètre de Michelson, il est entendu qu'elle peut être appliquée à un spectrophotomètre qui comprend un interféromètre d'un autre type. Il suffit pour cela que l'interféromètre soit agencé pour produire au moins un interférogramme échantillonné selon un pas variable d'une différence de longueur de trajet optique.

**Revendications**

1. Spectophotomètre comprenant un interféromètre (3) agencé pour produire, à partir d'un faisceau lumineux (F1) entrant dans ledit spectrophotomètre, un échantillon d'un interférogramme selon des valeurs fixées d'une différence de longueur de trajet optique,

   **caractérisé en ce que** lesdites valeurs de différence de longueur de trajet optique présentent des écarts successifs (s) variables et adaptés pour qu'une distribution spectrale de la lumière dans le faisceau peut être évaluée à partir de l'ensemble suivant d'équations :

$$\sum_{k=1}^{k=N} A_k \times \cos\left(2\Pi \times f_k \times \delta_i\right) = M_i$$

   pour chaque nombre entier i de 1 à N, N étant le nombre de mesures d'intensité lumineuse dans l'échantillon d'interférogramme, et où

   $M_i$ est la i-ème mesure d'intensité lumineuse de l'échantillon d'interférogramme,

   $\delta_i$ est valeur de la différence de longueur de trajet optique correspondant à la mesure $M_i$,

   $f_k$ est une fréquence moyenne correspondant à une composante spectrale de la lumière du faisceau, k étant un nombre entier de 1 à N permettant d'identifier N fréquences $f_k$ différentes,

   $A_k$ est une intensité de la composante spectrale du faisceau correspondant à la fréquence $f_k$, et échelette.

   les écarts $\delta_{i+1} - \delta_i$ ne sont pas identiques pour des couples différents de mesures successives $M_i$, $M_{i+1}$ d'intensité lumineuse dans l'interférogramme.

2. Spectrophotomètre selon la revendication 1, dans lequel l'interféromètre (3) comprend un appareil de Michelson.

3. Spectrophotomètre selon la revendication 2, dans lequel l'appareil de Michelson est pourvu d'un miroir plan (32) et d'un miroir à échelette (33) disposés pour réfléchir des parties respectives du faisceau lumineux (F1), les valeurs de différence de longueur de trajet optique étant fixées par le miroir à

**4.** Spectrophotomètre selon la revendication 2, dans lequel l'appareil de Michelson est pourvu de deux miroirs à échelette (32, 33) disposés pour réfléchir des parties respectives du faisceau lumineux (F1).

**5.** Spectrophotomètre selon l'une quelconque des revendications 1 à 4, dans lequel l'interféromètre (3) forme plusieurs interférogrammes correspondant à des intervalles spectraux respectifs, le spectrophotomètre comprenant en outre un système dispersif (6) agencé de façon à séparer spatialement des parties de la lumière du faisceau correspondant respectivement aux interférogrammes.

**6.** Spectrophotomètre selon la revendication 5, dans lequel les interférogrammes sont constitués d'ensembles respectifs de valeurs d'intensité lumineuse mesurées parallèlement à une direction d'interférogramme commune (D1), et dans lequel le système dispersif (6) est orienté de sorte qu'une direction de dispersion dudit système (D2) est sensiblement perpendiculaire à la direction d'interférogramme (D1).

**7.** Procédé d'analyse spectrale d'un faisceau lumineux (F1) comprenant les étapes suivantes :

- former un interférogramme en dirigeant ledit faisceau dans un spectrophotomètre comprenant un interféromètre (3),
- mesurer un nombre fini d'intensités lumineuses de l'interférogramme, de façon à former un échantillon dudit interférogramme, lesdites mesures d'intensité lumineuse correspondant à des valeurs respectives d'une différence de longueur de trajet optique présentant des écarts variables (s) ;
- identifier des fréquences correspondant à des composantes spectrales respectives de la lumière dudit faisceau ; et
- calculer des intensités respectives des composantes spectrales à partir de l'ensemble suivant d'équations :

$$\sum_{k=1}^{k=N} A_k \times \cos\left(2\Pi \times f_k \times \delta_i\right) = M_i$$

pour chaque nombre entier i de 1 à N, N étant le nombre de mesures d'intensité lumineuse dans l'échantillon d'interférogramme, et où

$M_i$ est la i-ème mesure d'intensité lumineuse de l'échantillon d'interférogramme,
$\delta_i$ est valeur de la différence de longueur de trajet optique correspondant à la mesure $M_i$,
$f_k$ est l'une des fréquences identifiées correspondant à une composante spectrale de la lumière du faisceau,
k étant un nombre entier de 1 à N permettant d'identifier N fréquences $f_k$ différentes,
$A_k$ est l'intensité calculée pour la composante spectrale correspondant à la fréquence $f_k$, et
les écarts $\delta_{i+1} - \delta_i$ ne sont pas identiques pour des couples différents de mesures successives $M_i$, $M_{i+1}$ d'intensité lumineuse dans l'interférogramme.

**8.** Procédé selon la revendication 7, suivant lequel l'interférogramme est réalisé en utilisant un appareil de Michelson.

**9.** Procédé selon la revendication 8, suivant lequel l'appareil de Michelson est pourvu d'un miroir plan (32) et d'un miroir à échelette (33) disposés pour réfléchir des parties respectives du faisceau lumineux (F1), le miroir à échelette permettant de réaliser les valeurs de différence de longueur de trajet optique.

**10.** Procédé selon la revendication 8, suivant lequel l'appareil de Michelson est pourvu de deux miroirs à échelette (32, 33) disposés pour réfléchir des parties respectives du faisceau lumineux (F1).

**11.** Procédé selon l'une quelconque des revendications 7 à 10, mis en oeuvre en utilisant un spectrophotomètre selon la revendication 5 ou 6.

**12.** Procédé selon la revendication 11, suivant lequel les fréquences $f_k$ des composantes spectrales d'une partie du faisceau lumineux (F1) formant l'un des interférogrammes sont sélectionnées dans un intervalle spectral déterminé par une résolution spectrale du système dispersif (6) et par une position dudit interférogramme fixée par le système dispersif.

**Patentansprüche**

1. Spektrometer mit Interferometer (3), das eingerichtet ist, aus einem in das Spektrometer eintretenden Lichtstrahl (F1) eine Interferogrammabtastung nach festgelegten Werten einer optischen Weglängendifferenz zu erzeugen, **dadurch gekennzeichnet, dass** die Werte der optischen Weglängendifferenz aufeinanderfolgende variable Abstände darstellen, die geeignet sind, aus dem folgenden Satz von Gleichungen eine spektrale Verteilung des Lichts im Strahl zu bestimmen:

$$\sum_{k=1}^{k=N} A_k \times \cos\left(2\Pi \times f_k \times \delta_i\right) = M_i$$

wobei für jede ganze Zahl i von 1 bis N gilt, dass N die Anzahl der Lichtstärkenmessungen in der Interferogrammabtastung ist, und wobei

$M_i$ die i-te Lichtstärkenmessung der Interferogrammabtastung ist,
$\delta_i$ der Wert der optischen Weglängendifferenz ist, welcher der Messung $M_i$ entspricht,
$f_k$ eine Durchschnittsfrequenz ist, die einer spektralen Komponente des Lichts des Strahls entspricht, k eine ganze Zahl von 1 bis N ist, welche die Identifikation von N verschiedenen Frequenzen $f_k$ ermöglicht,
$A_k$ eine Stärke der spektralen Komponente des Strahls ist, die der Frequenz $f_k$ entspricht, und
die Abstände $\delta_{i+1} - \delta_i$ bei verschiedenen Paaren aufeinanderfolgender Messungen $M_i$, $M_{i+1}$ der Lichtstärke im Interferogramm nicht identisch sind.

2. Spektrometer nach Anspruch 1, wobei das Interferometer (3) ein Michelson-Gerät umfasst.

3. Spektrometer nach Anspruch 2, wobei das Michelson-Gerät mit einem ebenen Spiegel (32) und einem Echelette-Spiegel (33) ausgestattet ist, die angeordnet sind, um jeweilige Teile des Lichtstrahls (F1) zu reflektieren, wobei die Werte der optischen Weglängendifferenz durch den Echelette-Spiegel festgelegt werden.

4. Spektrometer nach Anspruch 2, wobei das Michelson-Gerät mit zwei Echelette-Spiegeln (32, 33) ausgestattet ist, die angeordnet sind, um jeweilige Teile des Lichtstrahls (F1) zu reflektieren.

5. Spektrometer nach einem der Ansprüche 1 bis 4, wobei das Interferometer (3) mehrere Interferogramme bildet, die jeweiligen spektralen Intervallen entsprechen, wobei das Spektrometer ferner ein Streuungssystem (6) umfasst, das so angeordnet ist, dass es Teile des Strahls, die jeweils den Interferogrammen entsprechen, räumlich trennt.

6. Spektrometer nach Anspruch 5, wobei die Interferogramme aus jeweiligen Sätzen von Lichtstärkenwerten, die parallel zu einer gemeinsamen Interfero grammrichtung (D1) gemessen wurden, ausgebildet sind und wobei das Streuungssystem (6) so ausgerichtet ist, dass eine Streuungsrichtung (D2) des Systems im Wesentlichen senkrecht zur Interferogrammrichtung (D1) ist.

7. Verfahren zur spektralen Analyse eines Lichtstrahls (F1), umfassend die folgenden Schritte:

- das Bilden eines Interferogramms durch Richten des Strahls in ein Spektrometer mit Interferometer (3),
- das Messen einer endlichen Zahl an Lichtstärken des Interferogramms, um eine Abtastung des Interferogramms zu bilden, wobei die Lichtstärkenmessungen jeweiligen Werten einer optischen Weglängendifferenz, die variable Abstände (s) darstellen, entsprechen;
- das Identifizieren von Frequenzen, die jeweiligen spektralen Komponenten des Lichts des Strahls entsprechen; und
- das Berechnen jeweiliger Intensitäten der spektralen Komponenten aus dem

$$\sum_{k=1}^{k=N} A_k \times \cos\left(2\Pi \times f_k \times \delta_i\right) = M_i$$

folgenden Satz von Gleichungen:

wobei für jede ganze Zahl i von 1 bis N gilt, dass N die Anzahl der Lichtstärkenmessungen in der Interferogrammabtastung ist, und wobei
$M_i$ die i-te Lichtstärkenmessung der Interferogrammabtastung ist,
$\delta_i$ der Wert der optischen Weglängendifferenz ist, welcher der Messung $M_i$ entspricht,
$f_k$ eine der identifizierten Frequenzen ist, die einer spektralen Komponente des Lichts des Strahls entspricht,
k eine ganze Zahl von 1 bis N ist, welche die Identifikation von N verschiedenen Frequenzen $f_k$ ermöglicht,
$A_k$ die für die spektrale Komponente berechnete Intensität ist, die der Frequenz $f_k$;
entspricht, und
die Abstände $\delta_{i+1}$ - $\delta_i$ bei verschiedenen Paaren aufeinanderfolgender Messungen $M_i$, $M_{i+1}$ der Lichtstärke im Interferogramm nicht identisch sind.

8. Verfahren nach Anspruch 7, wobei das Interferogramm unter Verwendung eines Michelson-Geräts ausgeführt ist.

9. Verfahren nach Anspruch 8, wobei das Michelson-Gerät mit einem ebenen Spiegel (32) und einem Echelette-Spiegel (33) ausgestattet ist, die angeordnet sind, um jeweilige Teile des Lichtstrahls (F1) zu reflektieren, wobei der Echelette-Spiegel die Realisierung der Werte der optischen Weglängendifferenz ermöglicht.

10. Verfahren nach Anspruch 8, wobei das Michelson-Gerät mit zwei Echelette-Spiegeln (32, 33) ausgestattet ist, die angeordnet sind, um jeweilige Teile des Lichtstrahls (F1) zu reflektieren.

11. Verfahren nach einem der Ansprüche 7 bis 10, das unter Verwendung eines Spektrometers nach Anspruch 5 oder 6 ausgeführt wird.

12. Verfahren nach Anspruch 11, wonach die Frequenzen $f_k$ der spektralen Komponenten eines Teils des Lichtstrahls (F1), die eines der Interferogramme bilden, aus einem spektralen Intervall ausgewählt werden, das durch eine spektrale Auflösung des Streuungssystems (6) und durch eine vom Streuungssystem festgelegte Position des Interferogramms bestimmt wird.

**Claims**

1. A spectrophotometer comprising an interferometer (3) configured to produce, from a light beam (F1) entering into said spectrophotometer, a sample of an interferogram according to fixed values of an optical path length difference, **characterized in that** said values of optical path length difference exhibit variable successive differences that are adapted so that a spectral distribution of the light in the beam can be evaluated from the following set of equations:

$$\sum_{k=1}^{k=N} A_k \times \cos(2\Pi \times f_k \times \delta_i) = M_i$$

for each integer i from 1 to N, N being the number of light intensity measurements in the interferogram sample, and where

$M_i$ is the i-th measurement of light intensity of the interferogram sample,
$\delta_i$ is the value of the optical path length difference corresponding to the measurement $M_i$,
$f_k$ is a mean frequency corresponding to a spectral component of the light in the beam, k being an integer from 1 to N making it possible to identify N different frequencies $f_k$,
$A_k$ is an intensity of the spectral component of the beam corresponding to the frequency $f_k$, and
the differences $\delta_{i+1}-\delta_i$ are not identical for different pairs of successive measurements $M_i$, $M_{i+1}$ of light intensity

in the interferogram.

2. The spectrophotometer according to claim 1, wherein the interferometer (3) comprises a Michelson apparatus.

3. The spectrophotometer according to claim 2, wherein the Michelson apparatus is equipped with a planar mirror (32) and a staircase mirror (33) arranged so as to reflect respective parts of the light beam (F1), the values of optical path length difference being determined by the staircase mirror.

4. The spectrophotometer according to claim 2, wherein the Michelson apparatus is equipped with two staircase mirrors (32, 33) arranged so as to reflect respective parts of the light beam (F1).

5. The spectrophotometer according to anyone of claims 1 to 4, wherein the interferometer (3) produces several interferograms corresponding to respective spectral intervals, the spectrophotometer also comprising a dispersing system (6) arranged in such a manner as to spatially separate parts of the light from the beam which correspond respectively to the interferograms.

6. The spectrophotometer according to claim 5, wherein the interferograms are formed by respective sets of light intensity values measured parallel to a common interferogram direction (D1), and wherein the dispersing system (6) is oriented such that a dispersion direction of said system is substantially perpendicular to the interferogram direction (D1).

7. A method for spectral analysis of a light beam comprising the following steps:

producing an interferogram by directing said beam into a spectrophotometer comprising an interferometer (3), measuring a finite number of light intensities of the interferogram, so as to form a sample of said interferogram, said light intensity measurements corresponding to respective values of an optical path length difference exhibiting variable differences;
identifying frequencies corresponding to respective spectral components of the light in said beam; and calculating respective intensities of the spectral components using the following set of equations:

$$\sum_{k=1}^{k=N} A_k \times \cos(2\Pi \times f_k \times \delta_i) = M_i$$

for each integer i from 1 to N, N being the number of light intensity measurements in the interferogram sample, and where

$M_i$ is the i-th measurement of light intensity of the interferogram sample,
$\delta_i$ is the value of the optical path length difference corresponding to the measurement $M_i$,
$f_k$ is one of the identified frequencies corresponding to a spectral component of the light in the beam, k being an integer from 1 to N allowing N different frequencies $f_k$ to be identified,
$A_k$ is the intensity calculated for the spectral component corresponding to the frequency $f_k$, and the differences $\delta_{i+1}$-$\delta_i$ are not identical for different pairs of successive measurements $M_i$, $M_{i+1}$ of light intensity in the interferogram.

8. The method according to claim 7, wherein the interferogram is produced using a Michelson apparatus.

9. The method according to claim 8, wherein the Michelson apparatus is equipped with a planar mirror (32) and a staircase mirror (33) arranged so as to reflect respective parts of the light beam (F1), the staircase mirror allowing to produce the values of optical path length difference.

10. The method according to claim 8, wherein the Michelson apparatus is equipped with two staircase mirrors (32, 33) arranged so as to reflect respective parts of the light beam (F1).

11. The method according to anyone of claims 7 to 10, implemented using a spectrophotometer according to claim 5 or 6.

12. The method according to claim 11, wherein the frequencies $f_k$ of the spectral components of a part of the light beam (F1) forming one of the interferograms are selected within a spectral interval determined by a spectral resolution of the dispersing system (6) and by a position of said interferogram determined by the dispersing system.

FIG.1.

FIG.2a.

FIG.2b.

FIG.3a.

FIG.3b.

**EP 1 793 213 B1**

## RÉFÉRENCES CITÉES DANS LA DESCRIPTION

**Documents brevets cités dans la description**

- US 6351307 B